# EUROPÄISCHE PATENTSCHRIFT

(11) **EP 2 342 997 B1**
(45) Veröffentlichungstag und Bekanntmachung des Hinweises auf die Patenterteilung: **20.06.2012**
(21) Anmeldenummer: 11150195.3
(22) Anmeldetag: 05.01.2011
(51) Int. Cl.: A47J 31/44

(54) **Getränkezubereitungsmaschine**
Beverage preparation machine
Machine de préparation de boissons

(30) Priorität: 12.01.2010 DE 202010000024 U
(43) Veröffentlichungstag der Anmeldung: 13.07.2011
(73) Patentinhaber: WIK Far East Ltd., North Point, Hong Kong (CN)
(72) Erfinder: Lüke, Werner, 44879 Bochum (DE)
(74) Vertreter: Haverkamp, Jens

(56) Entgegenhaltungen:
- EP-A1- 1 731 065
- EP-A1- 2 215 943
- EP-B1- 1 740 078
- US-A- 5 161 455

## Beschreibung

Die Erfindung betrifft eine Getränkezubereitungsmaschine, umfassend eine Einrichtung zum Aufstellen von zumindest einem Trinkgefäß zum Auffangen eines durch einen Auslauf der Getränkezubereitungsmaschine ausgegebenen Getränks mit einem Restflüssigkeitssammelbehälter.

Getränkezubereitungsmaschinen, wie beispielsweise Kaffeemaschinen, insbesondere wenn als so genannte Vollautomaten konzipiert, verfügen über einen Auslauf, aus dem das gebrühte Getränk ausgegeben wird. Unterhalb des Auslaufes befindet sich eine Einrichtung zum Aufstellen von zumindest einem Trinkgefäß. Diese Einrichtung umfasst typischerweise einen Restflüssigkeitssammelbehälter, der oberseitig durch ein Tropfgitter abgedeckt ist. Das Tropfgitter verfügt über Öffnungen zum Durchlassen von nicht durch ein darauf abgestelltes Trinkgefäß aufgefangener und aus dem Auslauf ausgegebener Flüssigkeit, die sodann in dem Restflüssigkeitssammelbehälter aufgefangen wird. Derartige Sammelbehälter sind von der Getränkezubereitungsmaschine abnehmbar, um von Zeit zu Zeit die darin angesammelten Flüssigkeitsreste wegschütten und den Behälter als solchen reinigen zu können.

Eine solche Einrichtung ist aus EP 1 740 078 A1 bekannt. Bei dieser Einrichtung verfügt der Restflüssigkeitssammelbehälter über eine Grifffläche und eine Verriegelungseinrichtung, anhand der nach Entriegeln der Restflüssigkeitssammelbehälter zusammen mit der Brüheinheit aus der Getränkezubereitungsmaschine herausgenommen werden können.

Aus EP 1 731 065 B1 ist eine weitere Getränkezubereitungsmaschine bekannt, bei der die Einrichtung zum Aufstellen von zumindest einem Trinkgefäß einen Restflüssigkeitssammelbehälter umfasst, der zum Entleeren und Spülen von der Getränkezubereitungsmaschine abnehmbar ist. Die in diesem Dokument beschriebene Aufstelleinrichtung umfasst ein erstes Tropftraggitter, welches von dem Sammeltank abnehmbar ist, und wenn es abgenommen ist, einen zweiten Tropfenträger offen werden lässt. Dies dient dem Zweck, dass je nach dem, welcher Tropfenträger verwendet wird, Trinkgefäße unterschiedlicher Höhe unter den Auslauf zum Auffangen eines Getränkes positioniert werden können. Wird zum Ausgeben eines bereiteten Getränkes in ein höheres Trinkgefäß das obere Tropftraggitter abgenommen, muss dieses entweder auf oder neben der Getränkezubreitungsmaschine abgelegt werden. Daran anhaftende Restflüssigkeitstropfen, wie beispielsweise Kaffee, Milch oder Milchschaum können dabei von dem abgelegten Tropftraggitter auf den Untergrund fließen.

Aus US 5,161,455 ist eine Getränkezubereitungsmaschine bekannt, die über eine Aufstellschublade verfügt. Diese befindet sich oberhalb einer unteren Aufstellfläche und kann zwischen einer ausgezogenen Benutzungsstellung und einer in einer Standsäule eingeschobenen Nichtbenutzungsstellung verstellt werden. Die Aufstellschublade dient zum Aufstellen einer Kaffee- oder Teekanne und verfügt über eine Warmhalteplatte.

EP 2 215 943 A1 offenbart als nachveröffentlichter Stand der Technik ein Gerät für eine Getränkeausgabe, bei dem oberhalb einer ersten Auflage, unter der ein Restflüssigkeitssammelbehälter angeordnet ist, eine zweite Auflage zwischen einer Benutzungsstellung und einer Nichtbenutzungsstellung nach Art einer Schublade verstellt werden kann. Diese zweite Auflage verfügt jedoch nicht über einen Restflüssigkeitssammelbehälter.

Ausgehend von dem eingangs diskutierten Stand der Technik liegt der Erfindung daher die Aufgabe zugrunde, eine eingangs genannte, gattungsgemäße Getränkezubereitungsmaschine vorzuschlagen, bei der die Aufstelleinrichtung mit ihrem Restflüssigkeitssammelbehälter nicht nur eine einfache Bedienbarkeit erlaubt, sondern bei der eine Positionierung von Trinkgefäßen unterschiedlicher Höhe unter dem Auslauf möglich ist, ohne die zu dem vordiskutierten Stand der Technik aufgezeigten Nachteile hinnehmen zu müssen.

Diese Aufgabe wird erfindungsgemäß durch eine eingangs genannte, gattungsgemäße Getränkezubereitungsmaschine mit den Merkmalen des Anspruchs 1 gelöst.

Bei dieser Getränkezubereitungsmaschine ist die Einrichtung zum Aufstellen von zumindest einem Trinkgefäß mit ihrem Restflüssigkeitssammelbehälter verstellbar, und zwar von einer Benutzungsstellung, in der diese sich unterhalb des Auslaufes der Getränkezubereitungsmaschine befindet in eine Nichtbenutzungsstellung, in der diese sich nicht unterhalb der Getränkezubereitungsmaschine befindet, gleichwohl Teil der Getränkezubereitungsmaschine verbleibt. Die Verstellbarkeit kann unterschiedlich konzipiert sein. Gemäß einem Ausführungsbeispiel ist eine Verstellbarkeit entlang einer translatorischen Bewegungsbahn vorgesehen, bei der die Einrichtung nach Art einer Schublade gegenüber dem Gehäuse bzw. den übrigen Bestandteilen der Getränkezubereitungsmaschine verstellt werden kann. In ihrer Nichtbenutzungsstellung ist die Aufstelleinrichtung typischerweise zumindest weitgehend in dem Gehäuse der Getränkezubereitungsmaschine aufgenommen und wird für eine Benutzung derselben schubladenartig aus dem Gehäuse der Getränkezubereitungsmaschine ausgezogen. Die Benutzungsstellung der Einrichtung ist typischerweise haptisch markiert, beispielsweise durch eine Rastung oder einen Anschlag.

Die Konzeption der Einrichtung als schubladenartiger Auszug gestattet, dass die Einrichtung ohne weiteres auch entlang derselben Bewegungsbahn aus der Getränkezubereitungsmaschine insgesamt herausgezogen und somit von dieser abgenommen, entleert sowie gesäubert werden kann. Die Möglichkeit, die Einrichtung in eine Benutzungsstellung und eine Nichtbenutzungsstellung zu bringen, gestattet es, unter dem Auslauf Trinkgefäße unterschiedlicher Höhe je nach Stellung der Einrichtung positionieren zu können. Dabei versteht es sich, dass die Einrichtung umfassend den Restflüssigkeitssammelbehälter sowie das beispielsweise einen solchen Restflüssigkeitssammelbehälter oberseitig bedeckende Tropfgitter eine gewisse Höhe aufweisen und dadurch unterhalb des Auslaufes in Abhängigkeit davon, ob sich die Einrichtung in ihrer unterhalb des Auslaufs befindlichen Benutzungsstellung befindet oder nicht, Trinkgefäße unterschiedlicher Höhe unter dem Auslauf positioniert werden können.

Gemäß der Erfindung ist die Aufstelleinrichtung mit ihrem Sammelbehälter lösbar an eine geräteseitig gelagerte Verstellmechanik angeschlossen. Durch diese ist die Aufstelleinrichtung in ihrer Nichtbenutzungsstellung gegen die Rückstellkraft eines Federelementes verriegelt in ihrer Nichtbenutzungsstellung gehalten.

Dabei kann die Verriegelung der Verstellmechanik und damit die an die Verstellmechanik angeschlossene Einrichtung mittels einer Push-Push-Halteeinrichtung ausgeführt sein. Dieses erlaubt, dass die Aufstelleinrichtung über keinerlei Griffflächen oder andere außenseitig zu bedienende Griffelemente verfügen muss, um die Einrichtung, wenn in der Nichtbenutzungsstellung befindlich, aus dieser in ihre Benutzungsstellung herausziehen zu können. Wird bei einer Ausgestaltung, wie vorbeschrieben, die Verriegelung gelöst, bewirkt die in dem Federelement gespeicherte Energie, dass die Aufstelleinrichtung zumindest über einen ersten Bewegungsbetrag aus dem Gehäuse der Getränkezubereitungsmaschine herausgedrückt wird. Für den Fall, dass die in dem Federelement gespeicherte Energie oder der durch das Federelement mögliche Bewegungsbetrag nicht ausreichend sein sollte, um die Aufstelleinrichtung in ihre Benutzungsstellung schieben zu können, kann, nachdem die Aufstelleinrichtung über einen ersten Bewegungsbetrag durch das Federelement bewegt worden ist, diese anschließend manuell ergriffen und ihre Benutzungsstellung herausgezogen werden. Anstelle einer Push-Push-Halteeinrichtung, wie vorstehend beschrieben, können auch andere Haltemechanismen benutzt werden, um die Aufstelleinrichtung in der Nichtbenutzungsstellung zu verriegeln. Es versteht sich, dass eine Verriegelung grundsätzlich dann nicht erforderlich ist, wenn eine Ausschubbewegung der Aufstelleinrichtung aus ihrer Nichtbenutzungsstellung in ihre Benutzungsstellung nicht Federkraft unterstützt erfolgt. Denkbar ist auch der Einsatz eines Stellmotors zum Bewegen der Einrichtung aus ihrer Benutzungsstelle in ihre Nichtbenutzungsstellung und umgekehrt.

Unter Berücksichtigung des zur Verfügung stehenden Einbauraumes hat sich gezeigt, dass sich Schenkelfedern besonders eignen, um die Aufstelleinrichtung aus ihrer Nichtbenutzungsstellung nach Lösen einer Verriegelung in ihre Benutzungsstellung zu bringen. Schenkelfedern sind flachbauend und können je nach Konzeption der Getränkezubereitungsmaschine beispielsweise zwischen einem Wassertank zum Bevorraten von für die Getränkebereitung benötigten Wasser und einem Tresterbehälter angeordnet sein. Bevorzugt wird eine Schenkelfeder eingesetzt, die zwei oder auch mehr Windungsabschnitte aufweist, womit es möglich ist, ohne den Windungsdurchmesser übermäßig groß konzipieren zu müssen, die Arme der Schenkelfeder in einem gewissen Abstand voneinander anzuordnen. Dieses wird gewünscht, um auf die Aufstelleinrichtung die notwendige Federkraft ausüben zu können, wenn diese aus ihrer Nichtbenutzungsstellung durch die Kraft des Federelementes in ihre Benutzungsstellung gebracht werden soll. Bei der Konzeption einer solchen Verstellmechanik ist die Benutzungsstellung typischerweise durch einen Anschlag begrenzt, an dem eine bei einer solchen Stellmechanik üblicherweise verwendeten Stellschiene zum Anschlag kommt. Die Aufstelleinrichtung selbst ist bei einer solchen Ausgestaltung lösbar, beispielsweise durch eine Rastung an die Stellschiene angeschlossen. Ein an eine solche Stellschiene angeschlossenes Dämpfungsglied kann die Ausfahrbewegung der Stellschiene mit der Aufstelleinrichtung verlangsamen. Bei einer solchen Ausgestaltung braucht benutzerseitig bei Verwendung einer Push-Push-Halteeinrichtung nur die Aufstelleinrichtung in die Getränkezubereitungsmaschine ein wenig eingedrückt zu werden. Anschließend erfolgt das Ausfahren derselben in ihre Benutzungsstellung selbsttätig.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1**:: eine perspektivische Ansicht einer als Kaffeemaschine ausge- führten Getränkezubereitungsmaschine mit einer Einrichtung zum Aufstellen von zumindest einem Trinkgefäß mit dieser Ein- richtung in ihrer Benutzungsstellung,
- **Fig. 2**:: die Kaffeemaschine der Figur 1 mit der Aufstelleinrichtung in ihrer Nichtbenutzungsstellung,
- **Fig. 3**:: eine perspektivische Teilan- und -einsicht der Kaffeemaschine der Figur 1,
- **Fig. 4**:: eine Darstellung entsprechend derjenigen der Figur 3 mit abge- nommenem Tresterbehälter zum Darstellen der Verstellmecha- nik für die Aufstelleinrichtung,
- **Fig. 5**:: die Verstellmechanik herausgelöst aus den benachbarten Bau- komponenten,
- **Fig. 6**:: einen Schnitt durch die Anordnung der Figur 4 im rückwärtigen Abschnitt des Restflüssigkeitssammelbehälters quer zur Ver- schieberichtung desselben,
- **Fig. 7**:: die Anordnung der Elemente der Kaffeemaschine der Figuren 4 bzw. 6 mit der Aufstelleinrichtung in ihrer in das Gehäuse der Kaffeemaschine eingeschobenen Nichtbenutzungsstellung und
- **Fig. 8**:: eine perspektivische Ansicht von unten auf die Anordnung der Elemente der Kaffeemaschine der Figur 7.

Eine Kaffeemaschine 1 als Getränkezubereitungsmaschine verfügt über ein Gehäuse 2, in dem die für die Getränkebereitung notwendigen Aggregate enthalten sind. An der Vorderseite der Kaffeemaschine 1 befindet sich ein Auslauf 3 zum Ausgeben des mit der Kaffeemaschine 1 gebrühten Getränks. Unterhalb des Auslaufes 3 verfügt die Kaffeemaschine 1 über zwei in der Kaffeemaschine 1 angeordnete Behälter 4, 5. Bei dem Behälter 4 handelt es sich um einen Frischwasserbehälter, in dem Frischwasser für die Bereitung der Getränke oder auch für die Bereitung von Heißwasser und/oder Heißdampf bevorratet wird. Bei dem Behälter 5 handelt es sich um einen Tresterbehälter, in den nach der Bereitung eines Kaffeegetränks der Filterkuchen eingebracht wird.

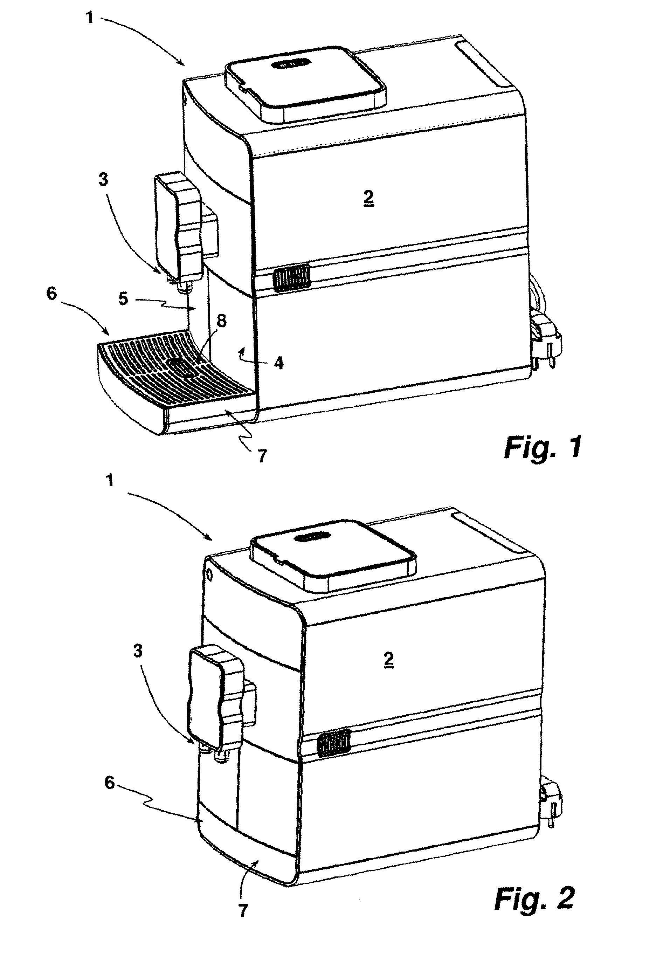

Teil der Kaffeemaschine 1 ist eine insgesamt mit dem Bezugszeichen 6 gekennzeichnete Einrichtung zum Aufstellen von zumindest einem Trinkgefäß zum Auffangen eines durch den Auslauf 3 ausgegebenen Getränks. Figur 1 zeigt die Aufstelleinrichtung 6 in ihrer Benutzungsstellung. Die Aufstelleinrichtung 6 umfasst einen nach Art einer Wanne konzipierten Restflüssigkeitssammelbehälter 7. Dieser ist oberseitig durch ein Tropfblech 8 abgedeckt. Das Tropfblech 8 verfügt über Durchbrechungen, um nicht in einem Trinkgefäß aufgefangene Flüssigkeit durch den darunter befindlichen Restflüssigkeitssammelbehälter 7 auffangen zu können.

Die Einrichtung 6 mit ihrem Restflüssigkeitssammelbehälter 7 und dem Tropfblech 8 ist nach Art einer Schublade aus ihrer in Figur 1 gezeigten, unterhalb des Auslaufes 3 befindlichen Stellung in das Gehäuse 2 der Kaffeemaschine 1 einschiebbar. Diese Stellung der Einrichtung 6 - die Nichtbenutzungsstellung der Einrichtung 6 - ist in Figur 2 gezeigt. Aus einem Vergleich der Darstellungen der Kaffeemaschine 1 mit ihrer Einrichtung 6 in ihrer Benutzungsstellung (Figur 1) und in ihrer Nichtbenutzungsstellung (Figur 2) macht deutlich, dass unterhalb des Auslaufes 3 jeweils Trinkgefäße mit unterschiedlicher Höhe zum Auffangen eines aus dem Auslauf 3 ausgegebenen Getränkes positionieren werden können.

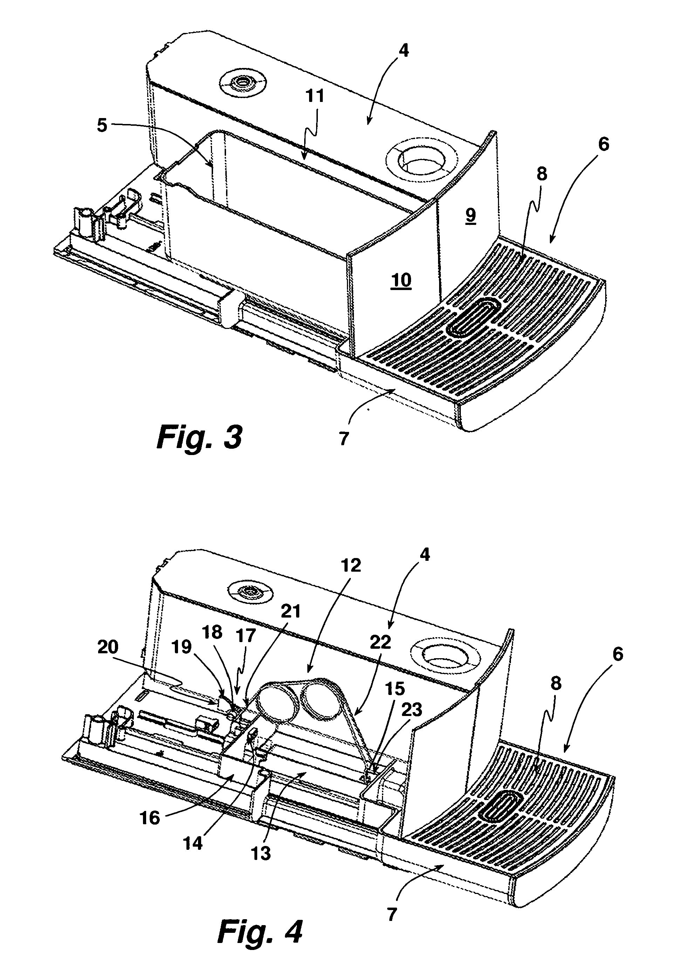

Die Anordnung des Wasserbehälters 4 und des daneben innerhalb der Kaffeemaschine 1 angeordneten Tresterbehälters 5 ist aus der Teildarstellung der Kaffeemaschine 1 in Figur 3 ersichtlich, in der die Aufstelleinrichtung 6 in ihrer aus dem Gehäuse 2 ausgezogenen Benutzungsstellung angeordnet ist. Die beiden Behälter 4, 5 tragen vorderseitig jeweils eine Blende 9 bzw. 10, die über die Breite der Behälter 4, 5 auskragt. Beide Behälter 4, 5 können schubladenartig aus dem Gehäuse 2 der Kaffeemaschine 1 herausgezogen und von den übrigen Bestandteilen der Getränkezubereitungsmaschine entfernt werden. In ihrer in Figur 3 gezeigten eingeschobenen Stellung (Benutzungsstellung) befindet sich zwischen den zueinander weisenden Seiten der beiden Behälter 4, 5 ein Spalt 11. Der Spalt 11 wird bei dem dargestellten Ausführungsbeispiel genutzt, um darin eine Schenkelfeder 12 einer Verstellmechanik zum Bewegen der Einrichtung 6 aus ihrer Nichtbenutzungsstellung in ihre Benutzungsstellung unterzubringen. Die Schenkelfeder 12 ist in der Darstellung der Figur 4 deutlicher erkennbar, da der Tresterbehälter 5 nicht dargestellt ist. Die Verstellmechanik umfasst neben der Schenkelfeder 12 eine in nicht näher dargestellter Art und Weise in ihrer Längserstreckung verschieblich gelagerte Verstellschiene 13 sowie eine Push-Push-Haltevorrichtung, bestehend bei dem dargestellten Ausführungsbeispiel aus einer Verriegelungsbuchse 14 und einem Verriegelungszapfen 15. Der Verriegelungszapfen 15 ist Teil der Verstellschiene 13. Demgegenüber ist die Verriegelungsbuchse 14, die in der Bewegungsachse der Verstellschiene 13 fluchtend zu dem Verriegelungszapfen 15 angeordnet ist, ortsfest an einem geräteseitigen Rahmenteil 16 gehalten. Angeschlossen an den Rahmen 16 ist zudem ein mit dem Bezugszeichen 17 gekennzeichnetes Widerlager. Das Widerlager 17 verfügt über zwei einander gegenüberliegend abragende Zapfen 18, 18.1, an denen sich die als Doppelschenkelfeder ausgeführte Schenkelfeder 12 abstützt. Bei der Schenkelfeder 12 handelt es sich um eine Doppelschenkelfeder, da diese aufgrund des Drahtverlaufes über jeweils einen aus zwei Drähten gebildeten Doppelarm und somit doppelt wirkend ausgelegt ist. Das Widerlager 17 umfasst des weiteren einen Stützschenkel 19, der sich in nicht dargestellter Art und Weise an einem Kaffeemaschinenseitigen Widerlager mit seiner Rückseite 20 abstützt. Der Arm der Schenkelfeder 12, mit dem diese an dem Widerlager 17 abgestützt ist, ist in Figur 4 mit dem Bezugszeichen 21 gekennzeichnet. Der andere, dem Arm 21 gegenüberliegende Arm 22 der Schenkelfeder stützt sich auf der Oberseite der Verstellschiene 13 an einem Stellnocken 13 ab. An diesen angeformt ist zu der Verriegelungsbuchse 14 weisend der Verriegelungszapfen 15. Die Schenkelfeder 12 ist in ihrer in Figur 4 gezeigten Stellung, in der sich die Aufstelleinrichtung 6 in ihrer aus dem Gehäuse 2 der Kaffeemaschine 1 ausgebrachten Stellung befindet, noch unter einer gewissen Vorspannung stehend vorgesehen. Die in Figur 4 gezeigte Stellung der Aufstelleinrichtung 6 ist anschlagbegrenzt, und zwar durch einen auf die Bewegung der Verstellschiene 13 wirkenden Anschlag. Gegen diesen Anschlag wirkt die Schenkelfeder 12 unter Zwischenschaltung der Verstellschiene 13 mit ihrer darin gespeicherten Federkraft.

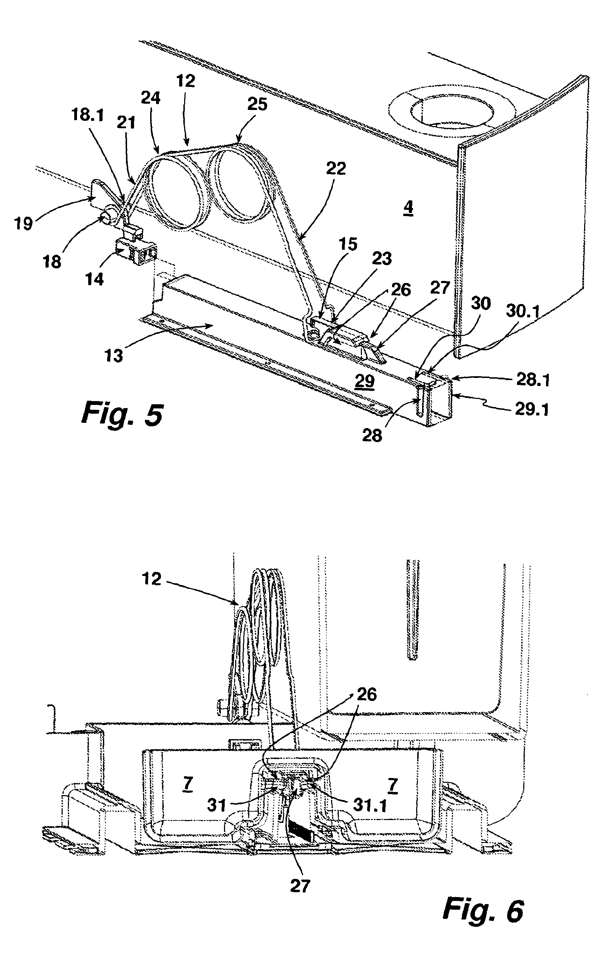

Figur 5 zeigt in einer vergrößerten Darstellung die vorbeschriebenen Elemente der Verstellmechanik mit der Verstellschiene 13 und der Schenkelfeder 12. Die Schenkelfeder 12 verfügt über zwei in der Ebene der Schenkelfeder 12 versetzt zueinander angeordnete Windungsabschnitte 24, 25. Die Windungsabschnitte 24, 25 des dargestellten Ausführungsbeispiels weisen einen gleichen oder in etwa gleichen Durchmesser auf. Die Windungsabschnitte 24, 25 unterscheiden sich hinsichtlich ihrer Windungszahl. Während der dem Widerlager 17 nähere Windungsabschnitt 24 nur eine Windung für jeden Ast der Doppelschenkelfeder 12 aufweist, verfügt der Windungsabschnitt 25 über zwei Windungen.

Angrenzend an die Stellnocke 23 der Verstellschiene 13 befindet sich eine in Querrichtung zur längsaxialen Bewegungsrichtung der Verstellschiene 13 hinterschnittene, zweigeteilte Aufnahme 26. Die beiden Aufnahmen 26 sind durch einen in vertikaler Richtung verlaufenden Steg 27 voneinander getrennt. Die Aufnahmen 26 dienen zum Anschließen des Restflüssigkeitssammelbehälters 7 der Aufstelleinrichtung 6 an die Verstellschiene 13 der Verstellmechanik. Zu diesem Zweck verfügt der Restflüssigkeitssammelbehälter 7 im Bereich seiner Unterseite über zwei Halteschienen, die in die Aufnahmen 26 eingreifen. Der Restflüssigkeitssammelbehälter 7 wird durch eine in Bezug auf die Verstellschiene 13 längsaxiale Bewegung an die Verstellschiene 13 angeschlossen. In seiner bestimmungsgemäßen an die Verstellschiene 13 angeschlossenen Stellung ist der Restflüssigkeitssammelbehälter 7 verrastet an der Schiene 13 fixiert. In Figur 5 sind die zwei dafür verwendeten Rastnuten erkennbar. In diese greifen an dem Restflüssigkeitssammelbehälter 7 angeformte Rastwülste ein. Um eine Bewegbarkeit der Seitenteile 29, 29.1 zueinander zum Ermöglichen eines Einbringens und eines Herausbringens der Rastwülste des Restflüssigkeitssammelbehälters 7 in bzw. aus den Rastnuten 28, 28.1 heraus zu ermöglichen, sind in die Oberseite der Verstellschiene 13 zwei Einschnitte 30, 30.1 eingebracht.

In einem Querschnitt durch die Aufnahmen 26 ist in Figur 6 der Restflüssigkeitssammelbehälter 7 in seiner an die Verstellschiene 13 angeschlossenen Stellung gezeigt. Deutlich erkennbar sind die jeweils in eine Aufnahme 26 eingreifenden Halteschienen 31, 31.1 des Restflüssigkeitssammelbehälters 7. Diese Konzeption ermöglicht, dass die Verstellschiene 13 sich nur bis unter den hinteren Abschnitt des Restflüssigkeitssammelbehälters 7 erstrecken muss, da durch den vorbeschriebenen Eingriff der Halteleisten 31, 31.1 in die Aufnahmen 26 ein Verkippen des Restflüssigkeitssammelbehälters 7 nach vorne verhindert ist. Daher kann bei einer solchen Ausgestaltung der Restflüssigkeitssammelbehälter 7 auch mit Abstand vom Boden der Kaffeemaschine 1 angeordnet sein und kann daher, ohne mit seinem Boden einen Boden der Kaffeemaschine 1 oder den Boden einer Aufstellunterlage zu berühren, bewegt werden.

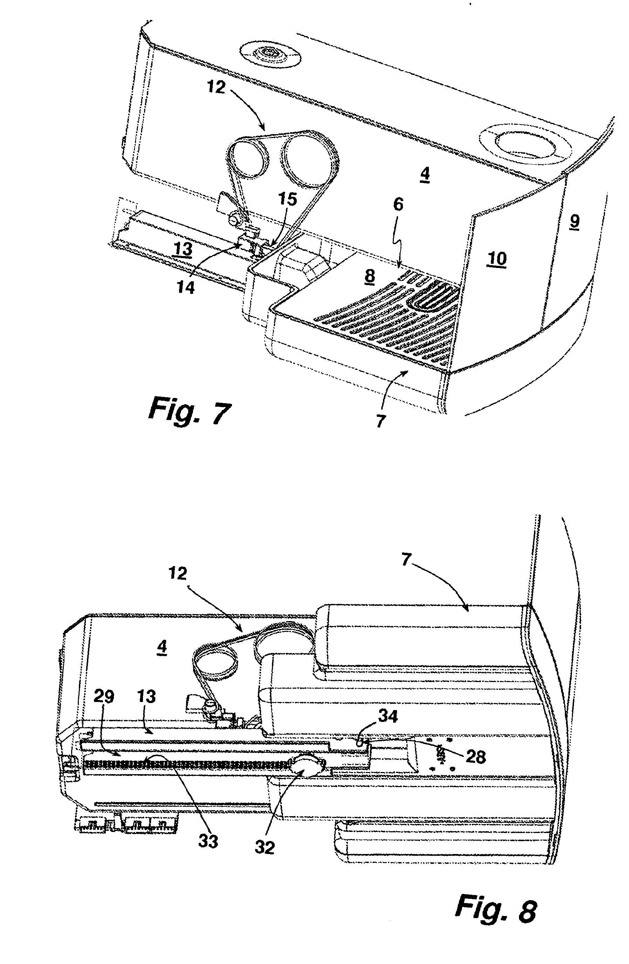

Figur 7 zeigt die Aufstelleinrichtung 6 mit ihrem Restflüssigkeitssammelbehälter 7 und dem Tropfblech 8 in ihrer Nichtbenutzungsstellung, eingeschoben in das Gehäuse 2 der Kaffeemaschine 1. Das Einschieben der Aufstelleinrichtung 6 erfolgt gegen die Kraft der Schenkelfeder 12, die somit in der in Figur 7 gezeigten Stellung gespannt ist. Gehalten gegen die Kraft der Schenkelfeder 12 ist die Verstellschiene 13 dadurch, dass der Verriegelungszapfen 15 in die Verriegelungsbuchse 14 der Push-Push-Haltevorrichtung eingreift. Von außen fluchtet bei dem dargestellten Ausführungsbeispiel die Frontseite der Aufstelleinrichtung 6 mit den Blenden 9, 10 der darüber befindlichen Behälter 4, 5. Erkennbar weist die Aufstelleinrichtung 6 vorderseitig keine das Design störende Griffelemente oder dergleichen auf. Aus ihrer in Figur 7 gezeigten Nichtbenutzungsstellung, in der die Aufstelleinrichtung 6 sich nicht unterhalb des Auslaufes 3 befindet, kann die Aufstelleinrichtung 6 in ihre Benutzungsstellung bewegt werden, wenn ein Benutzer die Aufstelleinrichtung 6 zum Lösen der Verriegelung der Push-Push-Haltevorrichtung geringfügig weiter einschiebt. Dieses hebt die Verriegelung des Verriegelungszapfens 15 innerhalb der Verriegelungsbuchse 14 auf. Durch die in der Schenkelfeder 12 gespeicherten Energie schiebt diese die Verstellschiene 13 und damit die daran angeschlossene Aufstelleinrichtung 6 aus dem Gehäuse 2 der Kaffeemaschine heraus, bis die in Figur 4 gezeigte Benutzungsstellung erreicht ist. Die Verstellschiene 13 ist zu diesem Zweck in nicht näher dargestellter Art und weise geräteseitig geführt.

Zum Dämpfen der vorbeschriebenen Ausfahrbewegung dient ein hydraulisches Dämpfungselement 32, welches mit einem Ritzel in eine Zahnstange 33, angeformt an der Innenseite des Seitenteils 29 der Verstellschiene 13, eingreift (siehe auch Figur 6). Durch das Dämpfungsglied 32 erfolgt die Bewegung der Aufstelleinrichtung 6 aus ihrer Nichtbenutzungsstellung in ihre ausgefahrene Benutzungsstellung mit reduzierter Geschwindigkeit. Aus der perspektivischen Unteransicht von unten ist in Figur 8 das Eingreifen eines Rastwulstes 34 des Restflüssigkeitssammelbehälters 7 in die Rastnut 28 der Verstellschiene 13 erkennbar.

Zum Lösen der Aufstelleinrichtung 6 mit ihrem Restflüssigkeitssammelbehälter 7 und dem darauf befindlichen Tropfblech 8 wird ausgehend von der Benutzungsstellung diese unter Überwindung der durch den Eingriff der Rastwülste 34 in die Rastnuten 28, 28.1 bereitgestellten Haltekräfte von der Verstellschiene 13 abgezogen. Dieses gelingt ohne weiteres, da die Verstellschiene 13 in dieser Bewegungsrichtung anschlagbegrenzt gehalten ist. Entsprechend umgekehrt erfolgt der Anschluss der Aufstelleinrichtung 6 an die Verstellschiene 13.

Aus der Beschreibung der Erfindung wird deutlich, dass bei der beschriebenen Getränkezubereitungsmaschine ohne weiteres zwei Niveaus zum Aufstellen von Trinkgefäßen unterhalb des Auslasslaufes 3 bereitgestellt werden können, insbesondere ohne dass zum Zwecke der Einstellung nicht benötigte Elemente gehandhabt oder weggelegt werden müssten. Überdies ist durch die beschriebene Verstellmechanik ein haptisch sehr ansprechendes Betätigungs- bzw. Bewegungsgefühl bereitgestellt, vor allem ohne hierzu elektrische Aktoren zu benötigen. Dies ist auch insofern von Vorteil, dass die Aufstelleinrichtung bewegt werden kann und von der Kaffeemaschine abgenommen werden kann, wenn letztere stromlos oder nicht eingeschaltet ist.

Ohne den Umfang der geltenden Ansprüche zu verlassen, ergeben sich für einen Fachmann zahlreiche weitere Ausgestaltungen, die Erfindung verwirklichen zu können, ohne dass dieses im Einzelnen im Rahmen dieser Ausführungen näher dargelegt werden müsste.

### Bezugszeichenliste

- 1: Kaffeemaschine
- 2: Gehäuse
- 3: Auslauf
- 4: Wasserbehälter
- 5: Tresterbehälter
- 6: Aufstelleinrichtung
- 7: Restflüssigkeitssammelbehälter
- 8: Tropfblech
- 9: Blende
- 10: Blende
- 11: Spalt
- 12: Schenkelfeder
- 13: Verstellschiene
- 14: Verriegelungsbuchse
- 15: Verriegelungszapfen
- 16: Rahmenteil
- 17: Widerlager
- 18, 18.1: Zapfen
- 19: Stützschenkel
- 20: Rückseite
- 21: Arm der Schenkelfeder
- 22: Arm der Schenkelfeder
- 23: Stellnocke
- 24: Windungsabschnitt
- 25: Windungsabschnitt
- 26: Aufnahme
- 27: Steg
- 28,28.1: Rastnut
- 29,29.1: Seitenteil
- 30, 30.1: Einschnitt
- 31,31.1: Halteleiste
- 32: Dämpfungselement
- 33: Zahnstange
- 34: Rastwulst

## Patentansprüche

1. Getränkezubereitungsmaschine, umfassend eine Einrichtung (6) zum Aufstellen von zumindest einem Trinkgefäß zum Auffangen eines durch einen Auslauf (3) der Getränkezubereitungsmaschine (1) ausgegebenen Getränks mit einem Restflüssigkeitssammelbehälter (7), **dadurch gekennzeichnet, dass** die Einrichtung (6) gegenüber dem Gehäuse (2) und dem Auslauf (3) der Getränkezubereitungsmaschine (1) aus einer Benutzungsstellung, in der sich die Einrichtung (6) mit ihrem Restflüssigkeitssammelbehälter (7) unterhalb des Auslaufes (3) befindet, in eine Nichtbenutzungsstellung, in der sich die Einrichtung (6) mit ihrem Restflüssigkeitssammelbehälter (7) nicht unterhalb des Auslaufes (3) befindet und zumindest weitestgehend in dem Gehäuse (2) der Getränkezubereitungsmaschine (1) aufgenommen ist, und umgekehrt bewegbar ist, wobei die Einrichtung (6) lösbar an eine maschinenseitig gehaltene und geführte Verstellmechanik (12,13, 14, 15) angeschlossen ist, durch welche Verstellmechanik (12, 13, 14, 15) die Einrichtung (6) in ihrer Nichtbenutzungsstellung gegen die Rückstellkraft eines Federelementes (12) verriegelt gehalten ist.

2. Getränkezubereitungsmaschine nach Anspruch 1, **dadurch gekennzeichnet, dass** die Verstellmechanik eine in dem Gehäuse der Getränkezubereitungsmaschine verschieblich gelagerte Verstellschiene (13) umfasst, die mittels einer Push-Push-Halteeinrichtung (14, 15) in der Nichtbenutzungsstellung der Einrichtung verrastet gehalten ist.

3. Getränkezubereitungsmaschine nach Anspruch 2, **dadurch gekennzeichnet, dass** die Push-Push-Halteeinrichtung über eine Verriegelungsbuchse (14), vorzugsweise geräteseitig angeordnet, und über einen zu seiner Verriegelung in die Verriegelungsbuchse (14) eindrückbaren Verriegelungszapfen (15), vorzugsweise an der Verstellschiene angeordnet, verfügt.

4. Getränkezubereitungsmaschine nach Anspruch 2 oder 3, **dadurch gekennzeichnet, dass** zwischen der Verstellschiene (13) und einem geräteseitig angeordneten Widerlager (17) eine Ausschubfeder (12) als Federelement angeordnet ist, gegen deren Rückstellkraft die Einrichtung (6) in ihre Nichtbenutzungsstellung geschoben wird.

5. Getränkezubereitungsmaschine nach Anspruch 4, **dadurch gekennzeichnet, dass** die Ausschubfeder als Schenkelfeder (12) ausgeführt ist, deren einer Arm (22) an der Verstellschiene (13) und deren anderer Arm (21) an dem Widerlager (17) abgestützt ist.

6. Getränkezubereitungsmaschine nach Anspruch 5, **dadurch gekennzeichnet, dass** die Ausschubfeder (12) zwei, in der Ebene der Feder versetzt zueinander angeordnete Windungsabschnitte (24, 25) aufweist.

7. Getränkezubereitungsmaschine nach Anspruch 6, **dadurch gekennzeichnet, dass** die Windungsanzahl in den beiden Windungsabschnitten (24, 25) unterschiedlich ist.

8. Getränkezubereitungsmaschine nach Anspruch 7, **dadurch gekennzeichnet, dass** in dem der Abstützung der Ausschubfeder (12) an der Verstellschiene (13) näheren Windungsabschnitt (25) die Windungsanzahl größer ist als in dem anderen Windungsabschnitt (24).

9. Getränkezubereitungsmaschine nach einem der Ansprüche 2 bis 8, **dadurch gekennzeichnet, dass** der Restflüssigkeitssammelbehälter (7) der Einrichtung (6) an die Verstellschiene (13) in Bewegungsrichtung der Verstellschiene (13) mittels einer Rastung (28, 28.1, 34) lösbar angeschlossen bzw. anschließbar ist.

10. Getränkezubereitungsmaschine nach einem der Ansprüche 1 bis 9, **dadurch gekennzeichnet, dass** zum Halten des Restflüssigkeitssammelbehälters (7) in seiner bestimmungsgemäßen Anordnung an der Verstellschiene (13) zumindest eine in Bewegungsrichtung der Stellschiene (13) in ihre Benutzungsstellung hin offene und in Querrichtung dazu hinterschnittene Aufnahme (26) vorgesehen ist in die jeweils eine am Restflüssigkeitssammelbehälter (7) der Einrichtung (6) angeordnete Halteleiste (31, 31.1) eingreift.

11. Getränkezubereitungsmaschine nach einem der Ansprüche 1 bis 10, **dadurch gekennzeichnet, dass** die Getränkezubereitungsmaschine als Kaffeemaschine (1), insbesondere als so genannter Vollautomat ausgeführt ist.

## Claims

1. A beverage preparation machine comprising a device (6) for the erecting of at least one drinking vessel for collecting a beverage discharged through an outlet (3) of the beverage preparation machine (1) having a residual liquid collector (7), wherein the device (6) is movable relative to the housing (2) and to the outlet (3) of the beverage preparation machine (1) from a usage position in which the device (6) is with its residual liquid collector (7) is located beneath the outlet (3), into a non-usage position in which the device (6) with its residual liquid collector (7) is not located beneath the outlet (3) and is at least for the most part accommodated in the housing (2) of the beverage preparation machine (1), and is also movable vice versa, the device (6) being detachably attached to an adjuster mechanism (12,13, 14, 15) held and guided on the machine, by which adjuster mechanism (12, 13, 14, 15) the device (6) is held locked in its non-usage position against the restoring force of a spring element (12).

2. A beverage preparation machine according to claim 1 wherein the adjuster mechanism comprises an adjusting rail (13) which is displaceably mounted in the housing of the beverage preparation machine and which is held latched by means of a push-push holding device (14, 15) in the non-usage position of the device.

3. A beverage preparation machine according to claim 2 wherein the push-push holding device has a locking bush (14), preferably arranged on the machine, and a locking pin (15), preferably arranged on the adjusting rail and which can be pressed into the locking bush (14) to lock said holding device.

4. A beverage preparation machine according to claim 2 or 3 wherein there is disposed between the adjusting rail (13) and an abutment (17) arranged on the machine an ejector spring (12) as a spring element against whose restoring force the device (6) is pushed into its in non-usage position.

5. A beverage preparation machine according to claim 4, where the ejector spring is configured as a leg spring (12) whose one leg (22) is supported off the adjusting rail (13) and whose other leg (21) is supported off the abutment (17).

6. A beverage preparation machine according to claim 5 wherein the ejector spring (12) exhibits two coil sections (24, 25) which are arranged offset relative to one another in the plane of the spring.

7. A beverage preparation machine according to claim 6 wherein the number of coils in the two coil sections (24, 25) is different.

8. A beverage preparation machine according to claim 7 wherein the number of coils in the coil section (25) closer to the support of the ejector spring (12) on the adjusting rail (13) is greater than in the other coil section (24).

9. A beverage preparation machine according to any one of claims 2 to 8 wherein the residual liquid collector (7) of the device (6) is detachably attached or attachable to the adjusting rail (13) in the direction of motion of the adjusting rail (13) by means of a detent (28, 28.1, 34).

10. A beverage preparation machine according to any one of claims 1 to 9 wherein for holding the residual liquid collector (7) in its intended arrangement on the adjusting rail (13) there is provided at least one mount (26) open towards its usage position in the direction of motion of the adjusting rail (13) and undercut in the direction square thereto, and in each of which engages a holding rail (31, 31.1) arranged on the residual liquid collector (7) of the device (6).

11. A beverage preparation machine according to any one of claims 1 to 10 wherein the beverage preparation machine is configured as a coffee machine (1), in particular as a so-called fully automatic machine.

## Revendications

1. Machine de préparation de boisson comprenant un dispositif (6) de dépose d'au moins un récipient à boissons destiné à recueillir une boisson distribuée par l'écoulement (3) d'une machine de préparation de boisson (1) avec un récipient collecteur de liquides résiduels (7), **caractérisée en ce que** le dispositif (6) est mobile par rapport au bâti (2) et à l'écoulement (3) de la machine de préparation de boisson (1) depuis une position d'utilisation, au cours de laquelle le dispositif (6) avec son récipient collecteur de liquides résiduels (7) se trouve sous l'écoulement (3), vers une position de non-utilisation, au cours de laquelle le dispositif (6) avec son récipient collecteur de liquides résiduels (7) ne se trouve pas sous l'écoulement (3) et est du moins en grande partie logé dans le bâti (2) de la machine de préparation de boisson (1), et vice-versa, le dispositif (6) étant maintenu et guidé de façon amovible du côté machine à un mécanisme de réglage (12, 13, 14, 15) maintenu par lequel mécanisme de réglage (12, 13, 14, 15) le dispositif (6) est maintenu verrouillé contre la force de rappel d'un élément à ressort (12), dans sa position de non-utilisation.

2. Machine de préparation de boisson selon la revendication 1, **caractérisée en ce que** le mécanisme de réglage comprend un rail de réglage (13) logé en translation dans le bâti de la machine de préparation de boisson qui, grâce à un dispositif de maintien push-push (14, 15) est maintenu encliqueté dans la position de non-utilisation du dispositif.

3. Machine de préparation de boisson selon la revendication 2, **caractérisée en ce que** le dispositif de maintien push-push est disposé au moyen d'une douille de verrouillage (14), de préférence coté appareil et dispose d'un tourillon de verrouillage (15) qui peut être enfoncé à des fins de verrouillage dans la douille de verrouillage (14), disposé de préférence sur le rail de réglage.

4. Machine de préparation de boisson selon la revendication 2 ou 3, **caractérisée en ce qu'**un ressort de déploiement (12) faisant office d'élément à ressort est disposé entre le rail de réglage (13) et une butée (17), contre la force de rappel duquel le dispositif (6) est poussé dans sa position de non-utilisation.

5. Machine de préparation de boisson selon la revendication 4, **caractérisée en ce que** le ressort à déploiement est réalisé sous la forme d'un ressort spiralé (12) dont l'un des bras (22) s'appuie sur le rail de réglage (13) et l'autre bras (21) sur la butée (17).

6. Machine de préparation de boisson selon la revendication 5, **caractérisée en ce que** le ressort de déploiement (12) présente deux tronçons de spires (24, 25) disposés sur le plan du ressort en décalage l'un par rapport à l'autre.

7. Machine de préparation de boisson selon la revendication 6, **caractérisée en ce que** le nombre de spires dans les deux tronçons de spires (24, 25) est différent.

8. Machine de préparation de boisson selon la revendication 7, **caractérisée en ce que**, dans le tronçon de spires (25) proche de l'appui du ressort de déploiement (12) sur le rail de réglage (13), le nombre de spires est plus grand que dans l'autre tronçon de spires (24).

9. Machine de préparation de boisson selon l'une des revendications 2 à 8, **caractérisée en ce que** le récipient collecteur de liquides résiduels (7) du dispositif (6) est raccordé ou peut être raccordé de façon amovible sur le rail de réglage (13), dans le sens de déplacement du rail de réglage (13), au moyen d'un enclenchement (28, 28.1, 34).

10. Machine de préparation de boisson selon l'une des revendications 2 à 9, **caractérisée en ce que**, pour maintenir le récipient collecteur de liquides résiduels (7) dans sa disposition conforme à l'utilisation, contre le rail de guidage (13), il est prévu au moins un logement (26) ouvert dans le sens de déplacement du rail de guidage (13) vers sa position d'utilisation et contre-découpé dans le sens perpendiculaire à celui-ci, dans lequel s'engage respectivement une baguette de maintien (31, 31.1) disposée sur le récipient collecteur de liquides résiduels (7) du dispositif (6).

11. Machine de préparation de boisson selon l'une des revendications 1 à 10, **caractérisée en ce que** la machine de préparation de boisson est conçue comme une machine à café (1), notamment sous la forme d'une machine appelée automate à café.
